# EUROPÄISCHE PATENTSCHRIFT

(11) **EP 0 492 241 B1**
(45) Veröffentlichungstag und Bekanntmachung des Hinweises auf die Patenterteilung: **30.11.1994**
(21) Anmeldenummer: 91121052.4
(22) Anmeldetag: 09.12.1991
(51) Int. Cl.: F01P 7/16, F01P 3/20, B60H 1/03, G05D 23/13

(54) **Thermostatventil**
Soupape thermostatique
Thermostatic valve

(30) Priorität: 28.12.1990 DE 4042123
(43) Veröffentlichungstag der Anmeldung: 01.07.1992
(73) Patentinhaber: Firma J. Eberspächer, 73730 Esslingen (DE)
(72) Erfinder: Humburg, Michael, Dipl.-Ing., W-7320 Göppingen (DE)

(56) Entgegenhaltungen:
- EP-A- 0 306 911
- EP-A- 0 467 130
- DE-A- 2 029 590
- DE-A- 3 705 232
- US-A- 2 288 599
- US-A- 3 540 651

## Beschreibung

Die Erfindung bezieht sich auf ein Thermostatventil, insbesondere zur Steuerung von Kühlmittelflüssen in einem mit einem Heizgerät versehenen Kühlmittelkreislauf eines Verbrennungsmotors für ein Kraftfahrzeug, mit einem zwei Zulaufkammern und eine Ablaufkammer aufweisenden Ventilgehäuse und einem ein Dehnstoffelement aufweisenden Ventilkolben mit zwei Ventiltellern, die im Zusammenwirken mit die Zulaufkammern von der Ablaufkammer abteilenden Ventilsitzen Ventile bilden, wobei die Relativlage der Ventilsitze zu den Ventiltellern von außen veränderbar ist.

Ein derartiges Thermostatventil ist in der nachveröffentlichten EP-A-0 467 130 beschrieben.

Man kennt seit längerem Fahrzeugheizgeräte, die durch Verbrennung Wärme erzeugen und auf diese Weise eine Wärmequelle für das Fahrzeug darstellen. Das Heizgerät liefert Wärme für einen Fahrzeuginnenraum und/oder zur Vorwärmung des Kraftfahrzeug-Verbrennungsmotors vor dem Kaltstart. Bei der Wärmeerzeugung für einen Fahrzeuginnenraum kann es sich um Wärmeerzeugung bei nicht-laufendem Verbrennungsmotor ("Standheizung") oder zusätzliche Wärmeerzeugung bei nicht ausreichendem Wärmeangebot aus dem Verbrennungsmotor ("Ergänzungsheizung") handeln.

In vielen Fällen hat man das Heizgerät in den Kühlmittelkreislauf des Fahrzeugmotors eingebunden, insbesondere weil auf diese Weise sowohl Motorvorwärmung als auch Innenraumbeheizung möglich sind und weil das fahrzeugeigene Warmluftverteilungssystem für den Fahrzeuginnenraum optimal genutzt werden kann. Die sinnvollste Aufteilung der Wärmeleistung des Heizgeräts auf den Fahrzeuginnenraum und auf den Verbrennungsmotor war Gegenstand vielfältiger Überlegungen und Lösungen, insbesondere auch weil je nach Einsatzbedingungen und Wetterbedingungen wechselnde Gesichtspunkte im Vordergrund stehen. Dabei hat sich als günstige Lösung herausgestellt, in dem Kühlmittelkreislauf eine an dem Verbrennungsmotor vorbeiführende Bypassleitung vorzusehen und durch ein Ventil zu steuern, ob der Kühlmittelfluß durch den Verbrennungsmotor, durch die Bypassleitung oder in bestimmten Mengenverhältnissen sowohl durch den Verbrennungsmotor als auch durch die Bypassleitung führt. Wenn der Kühlmittelfluß vollständig durch die Bypassleitung führt, ist die Wärmeleistung des Heizgeräts auf die Verwendung zur Beheizung des Fahrzeuginnenraums konzentriert; der Verbrennungsmotor selbst erfährt keine Beheizung. Wenn der Kühlmittelfluß vollständig durch den Verbrennungsmotor führt, erfährt dieser maximale Beheizung; die zur Beheizung des Verbrennungsmotors eingesetzte Wärmeleistung vermindert die zur Beheizung des Fahrzeuginnenraums zur Verfügung stehende Wärmeleistung.

Bei früher bekannten, im beschriebenen Kühlmittelkreislauf eingesetzten Ventilen handelt es sich um Thermostatventile, die innerhalb eines vorbestimmten Regelbereichs die Rückauftemperatur im Kühlmittelkreislauf regeln. Die Rücklauftemperatur ist die Temperatur, mit der das durch den Verbrennungsmotor und/oder die Bypassleitung geleitete Kühlmittel zum Heizgerät zurückgeführt wird, um dort wieder aufgeheizt zu werden. Die bekannten Thermostatventile arbeiten dabei so, daß dem Verbrennungsmotor nur dann Kühlmittel zugeführt wird, wenn dessen Temperatur größer ist als die durch den Regelbereich des Thermostatventils festgelegte Solltemperatur im Rücklauf des Kühlmittelkreislaufs. Durch das Thermostatventil wird demnach dem Verbrennungsmotor also immer gerade nur so viel Wärme zu seiner Erwärmung zugeteilt, wie angesichts der Solltemperatur im Rücklauf übrig ist. Insbesondere unter Kaltstartbedingungen ist eine solche Motorvorwärmung angebracht. Bei ausreichend hohen Außentemperaturen, wenn sich also eine Motorvorwärmung als überflüssig erweist oder wenn der Motor aufgrund eines bereits erfolgten Betriebs noch über genug Restwärme zum Starten auch bei niedrigen Außentemperaturen verfügt, erweist es sich als energetisch ungünstig, daß wegen der festgelegten Solltemperatur des Thermostatventils eine Beheizung des Verbrennungsmotors in weit stärkerem Maße erfolgt als dies notwendig wäre und somit das Heizgerät im Kühlmittelkreislauf eine höhere Leistung zur Beheizung des Fahrzeuginnenraums erbringen muß.

Das eingangs erwähnte, in der EP-A-0 467 130 beschriebene Thermostatventil schafft hier bereits grundsätzlich Abhilfe dadurch, daß infolge der Veränderbarkeit der Relativlage der Ventilsitze zu den Ventiltellern entsprechend sein Regelbereich von außen veränderbar ist.

Durch eine Eingriffsmöglichkeit von außen, also ohne die Regelfunktion des Thermostatventils zu unterbrechen oder einzuschränken, wird eine Möglichkeit geschaffen, um bei Bedarf den Regelbereich des Thermostatventils und damit die Solltemperatur im Rücklauf des Kühlmittelkreislaufs so zu ändern, daß eine wahlweise stärkere oder schwächere Vorwärmung des Verbrennungsmotors erfolgt, als dies bei der ursprünglich vorgegebenen Solltemperatur des Thermostatventils der Fall ist.

Ziel der vorliegenden Erfindung ist es, das eingangs erwähnte Thermostatventil unter Beibehaltung seiner vorstehend beschriebenen grundsätzlichen Vorzüge noch weiter zu vereinfachen und damit seine Wirksamkeit noch weiter zu erhöhen.

Dieses Ziel wird bei einem derartigen Thermostatventil erfindungsgemäß dadurch erreicht, daß durch die Gestaltung eines Ventilsitzes und/oder eines Ventiltellers eine zumindest teilweise von der Relativlagenänderung unabhängige Abdichtung zwischen einer Zulaufkammer und der Ablaufkammer gegeben ist. Gemäß einer bevorzugten Ausführung der Erfindung ist in diesem Sinne der der motorseitigen Zulaufkammer zugeordnete Ventilsitz parallel zur Ausdehnungsrichtung des Dehnstoffelements hülsenartig ausgebildet.

Die Erfindung bewirkt angesichts ihrer großen Einfachheit auch eine weiter erhöhte Betriebssicherheit und Lebensdauer eines zur Rede stehenden Thermostatventils.

Mit Vorteil sind die Ventilsitze mit einer im Ventilgehäuse geführten Verstelleinrichtung verbunden, die über einen aus dem Ventilgehäuse herausgeführten Verstellkolben von außen verstellbar ist. Somit lassen sich die Ventilsitze auf besonders einfach Weise mittels nur eines einzigen Verstellantriebs parallel verschieben, so daß zwar eine Änderung der Öffnungstemperatur erreicht wird, die Temperaturdifferenz zwischen Öffnungs- und Schließtemperatur des Regelbereichs jedoch erhalten bleibt. Bei der Änderung des Regelbereichs handelt es sich demnach - vergleichbar der Verschiebung der Ventilsitze - um eine Parallelverschiebung. Über den Verstellkolben kann diese Parallelverschiebung von außen vorgenommen werden. Vorzugsweise weist die Verstelleinrichtung einen die Ventilsitze aufnehmenden Verstellrahmen auf. Dieser kann in seinen Abmessungen den Innenraumverhältnissen des Ventilgehäuses so angepaßt sein, daß eine Führung des Verstellrahmens durch das Ventilgehäuse gegeben ist. Es besteht auch die Möglichkeit, den Verstellrahmen bereichsweise ventilsitzartig auszubilden, so daß Ventilsitze und Verstellrahmen eine Einheit bilden.

Zur einfachen und wirksamen Betätigung von außen steht der aus dem Ventilgehäuse herausgeführte Verstellkolben in Wirkverbindung mit einem Verstellantrieb. Dabei kann der Verstellantrieb einen Elektromotor zum Betrieb der Verstelleinrichtung aufweisen. Der Verstellantrieb kann jedoch auch mit einer Verstellschraube versehen sein, die eine manuelle Verstellung des Verstellrahmens erlaubt. Als besonders vorteilhaft erweist es sich, den Verstellantrieb mit einem elektrisch beheizbaren Dehnstoffelement zu versehen. Hierdurch ist ein besonders platzsparender, vom Aufbau her einfacher Verstellantrieb gegeben, der zudem eine einfache, eine Verstellung des Verstellrahmens auslösende Kopplung mit bereits vorhandenen Meßwertgebern im Kraftfahrzeug ermöglicht. In diesem Zusammenhang erscheint es besonders vorteilhaft, das Dehnstoffelement elektrisch mit dem Öltemperaturmeßfühler des Verbrennungsmotors zu verbinden. Die Öltemperatur wirkt dann als Steuergröße zur Veränderung des Thermostatventilregelbereichs durch den mit dem Dehnstoffelement in Wirkverbindung stehenden Verstellkolben.

Es sei noch besonders hervorgehoben, daß es sich vorliegend um ein spezielles, erfindungsgemäßes Thermostatventil handelt, losgelöst von der in den Kühlmittelkreislauf eingebauten Situation. Dieses Ventil ist vorzugsweise für den Einbau in den vorliegend offenbarten Kühlmittelkreislauf bestimmt.

Die Kraftfahrzeuge, für die die Erfindung vorzugsweise bestimmt ist, sind insbesondere Omnibusse, Lastkraftwagen, übliche Personenkraftfahrzeuge (kleiner als Omnibusse), Erdbewegungsmaschinen wie Bulldozer, Wohnmobile, Schiffe. In den einleitenden Erläuterungen wird von "einem Fahrzeuginnenraum" gesprochen, weil einige der genannten Fahrzeuge auch mehrere Innenräume aufweisen, beispielsweise ein Lastkraftwagen die Fahrerkabine und den Laderaum. Das Heizgerät wird vorzugsweise mit dem gleichen Brennstoff betrieben wie auch der Verbrennungsmotor, also insbesondere mit Dieselöl, Benzin oder Gas.

Die Erfindung und Ausgestaltungen der Erfindung werden nachfolgend anhand von Ausführungsbeispielen noch näher erläutert. Es zeigt:
- Fig. 1: einen Kühlmittelkreislauf mit schematisiert eingezeichneten Komponenten;
- Fig. 2: ein erfindungsgemäßes Thermostatventil in Prinzipdarstellung;
- Fig. 3: ein innerhalb eines Verstellrahmens des erfindungsgemäßen Thermostatventils angeordnetes Dehnstoffelement in Prinzipdarstellung;
- Fig. 4: den gegenüber dem Dehnstoffelement um einen Verschiebebetrag verschobenen Verstellrahmen gem. Fig. 3;
- Fig. 5: den um einen weiteren Verschiebebetrag gegenüber dem Dehnstoffelement verschobenen Verstellrahmen gemäß Fig. 3;
- Fig. 6: einen ein elektrisch beheizbares Dehnstoffelement aufweisenden Verstellantrieb zur Verstellung des Verstellrahmens;
- Fig. 7: einen einen Elektromotor aufweisenden Verstellantrieb;
- Fig. 8: einen eine Verstellschraube aufweisenden Verstellantrieb.

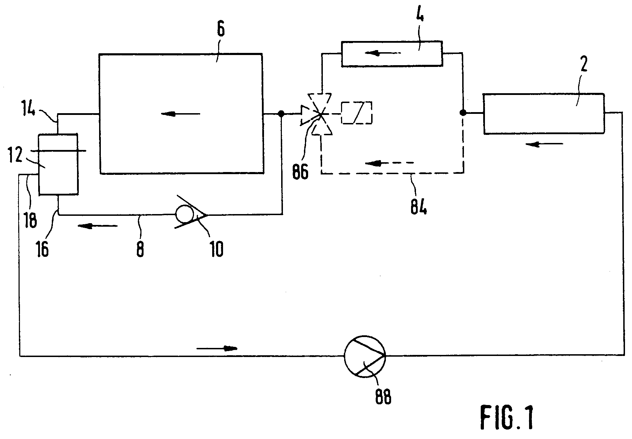

Der in Fig. 1 gezeichnete Kühlmittelkreislauf weist, beginnend mit einem Heizgerät 2, im wesentlichen die folgenden kreislaufleitungsmäßig miteinander verbundenen Komponenten auf: das Heizgerät 2 mit darin vorhandenem Verbrennungsgas/Kühlmittel-Wärmetauscher, einen Kühlmittel/Luft-Wärmetauscher 4 für einen Fahrzeuginnenraum, einen Verbrennungsmotor 6, eine an dem Verbrennungsmotor vorbeiführende Bypassleitung 8 mit darin angeordnetem Rückschlagventil 10, sowie ein Thermostatventil 12 an der Wiedereinmündung der Bypassleitung 8 hinter dem Motor 6 in den Kreislauf. Der Kreislauf wird im Betrieb in der soeben abgehandelten Reihenfolge von Kühlmittel, normalerweise Wasser oder ein Wasser-Glykol-Gemisch, durchströmt.

In gestrichelten Linien sind weitere Komponenten eingezeichnet, die weiter unten genauer beschrieben werden. Diese Komponenten können vorhanden sein, müssen aber nicht.

Wenn das Heizgerät 2 in Betrieb ist, strömt das dort aufgeheizte Kühlmittel zunächst durch den Wärmetauscher 4, wo es einen mehr oder weniger großen Teil seiner Wärme zur Beheizung des Fahrzeuginnenraums abgibt. Die Größe der dortigen Wärmeabgabe richtet sich beispielsweise danach, wie weit ein für die Durchströmung des Wärmetauschers 4 vorgesehenes Ventil geöffnet ist, mit welcher Drehzahl ein dem Wärmetauscher 4 zugeordnetes Gebläse läuft, und welche Temperatur die dem Wärmetauscher 4 zustromende Luft hat. Nach Verlassen des Wärmetauschers 4 strömt das Kühlmittel durch den Motor 6 und/oder die Bypassleitung 8 nach Maßgabe der Stellung des Thermostatventils 12. Wenn das Thermostatventil 12 in einer ersten Endstellung ist, in der sein erster Eingang 14 (verbunden mit dem Motor 6) geschlossen und sein zweiter Eingang 16 (angeschlossen an die Bypassleitung 8) offen ist, strömt das gesamte Kühlmittel durch die Bypassleitung 8 zum Ausgang 18 des Ventils 12. Der Motor 6 wird nicht von warmem Kühlmittel durchströmt und erfährt deshalb keine Beheizung. Wenn sich das Ventil in seiner zweiten Endstellung befindet, bei der der Eingang 14 geöffnet und der Eingang 16 geschlossen ist, geht der gesamte Kühlmittelfluß durch den Motor 6. Infolge der dortigen Wärmeabgabe strömt das Kühlmittel kälter zurück zum Heizgerät 2, als wenn es durch die Bypassleitung 8 geströmt wäre. In diesem Fall kann sich die Situation ergeben, daß das Heizgerät 2 den hindurchströmenden Kühlmittelstrom angesichts seiner Heizleistung nicht auf eine für eine intensive Beheizung des Fahrzeuginnenraums an sich optimale Temperatur von etwa 80 bis 95 °C aufheizen kann.

Wenn das Thermostatventil 12 dem Stand der Technik entspräche, würde es beispielsweise die Kühlmitteltemperatur am Ausgang 18 stets auf eine konstante Temperatur bzw. auf eine Temperatur in einem engen Temperaturbereich regeln, der durch das Thermostatventil vorgegeben ist. Wenn die Kühlmitteltemperatur am Ausgang 18 die Solltemperatur übersteigt, wird der Eingang 14 (weiter) geöffnet. Mehr Kühlmittel strömt durch den Motor 6, und infolgedessen sinkt die Kühlmitteltemperatur am Ausgang 18 wieder. Wenn die Kühlmitteltemperatur am Ausgang 18 unter die Solltemperatur sinkt, wird der Eingang 14 (stärker) geschlossen und der Eingang 16 (stärker) geöffnet; infolgedessen steigt die Temperatur am Ausgang 18, weil die Wärmeabgabe an den Motor 6 abnimmt. Dem Motor 6 wird also immer gerade so viel Wärme zu seiner Erwärmung zugeteilt, wie angesichts der Solltemperatur am Ausgang 18 übrig ist.

Es gibt Situationen, in denen man bewußt eine stärkere Beheizung des Motors 6 oder eine geringere Beheizung des Motors 6 oder gar eine Ausklammerung des Motors 6 von der Beheizung wünscht, so daß ein Grad der Beheizung des Motors 6 gewünscht wird, der durch den vorgegebenen Temperaturbereich des Thermostatventils nicht erreichbar ist. Eine mögliche Situation ist beispielsweise gegeben, wenn man nach einer kalten Nacht eine Aufheizung des Motors 6 für einen leichten Start sichergestellt haben will und dabei gegebenenfalls eine weniger weitgehende Beheizung des Fahrzeuginnenraums in Kauf nimmt. Eine andere mögliche Situation ist beispielsweise dann gegeben, wenn man über längere Zeit einen gut beheizten Fahrzeuginnenraum haben will, ohne daß der Motor 6 einer Beheizung bedarf, oder man den Motor weniger beheizen will, als es der vorgegebene Temperaturbereich des Thermostatventils ermöglicht, insbesondere weil er erst eine geraume Zeit später gestartet werden soll oder weil die Außentemperaturen nicht so niedrig sind, daß eine starke Beheizung des Motors 6 notwendig ist.

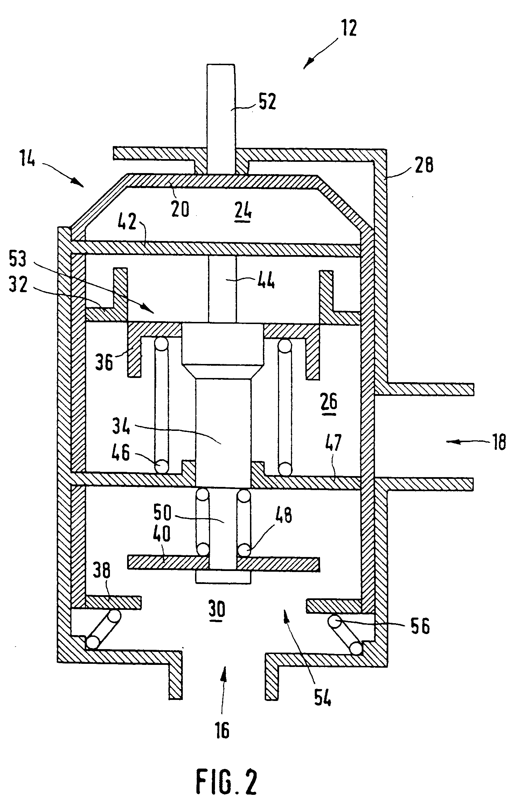

Anhand von Fig. 2 wird jetzt der Aufbau und die Funktion des Thermostatventils 12 detailliert beschrieben. Das Thermostatventil 12 ist bis auf den weiter unten zu beschreibenden Verstellrahmen 20 und die damit zusammenhängenden Bestandteile ein herkömmlich aufgebautes Thermostatventil. Dieses weist eine obere erste Zulaufkammer 24 (die mit dem Eingang 14 versehen ist), eine darunter angeordnete Ablaufkammer 26 (die mit dem Ausgang 18 versehen ist) und eine darunter angeordnete zweite Zulaufkammer 30 (die mit dem Eingang 16 versehen ist) auf. In der Ablaufkammer 26 ist ein Dehnstoffelement 34 angeordnet, an dessen Außenteil oben ein erster Ventilteller 36 sitzt, der in der gezeichneten Stellung von unten her gegen einen Ventilsitz 32 zwischen der ersten Zulaufkammer 24 und der Ablaufkammer 26 abdichtet. Unten am Außenteil des Dehnstoffelements 34 ist ein zweiter Ventilteller 40 befestigt, der in der gezeichneten Ventilstellung einen Ventilsitz 38 zwischen der zweiten Zulaufkammer 30 und der Ablaufkammer 26 freigibt, aber in der nicht gezeichneten, anderen Endstellung des Thermostatventils 12 von oben her den Ventilsitz 38 verschließt. Aus dem Außenteil des Dehnstoffelements 34 ragt nach oben in die erste Zulaufkammer 24 ein verschiebbarer Schaft oder Kolben 44, der sich an einem Steg 42 im Ventilgehäuse 28 abstützt.

Das Dehnstoffelement 34 reagiert auf die Kühlmitteltemperatur in der Ablaufkammer 26. Wenn diese Temperatur die durch Wahl des Dehnstoffelementes 34 festgelegte Ansprechtemperatur übersteigt, fährt der Kolben 44 aus. Da sich der Kolben 44 nicht nach oben bewegen kann, wird das ganze restliche Dehnstoffelement 34 nach unten gedrückt. Der erste Ventilteller 36 öffnet den Ventilsitz 32 und der zweite Ventilteller 40 schließt den Ventilsitz 38. Somit strömt jetzt das Kühlmittel von der ersten Zulaufkammer 24 durch die Ablaufkammer 26; der Zustrom durch die zweite Zulaufkammer 30 ist abgeschlossen. In der gezeichneten Stellung hingegen strömt Kühlmittel von der zweiten Zulaufkammer 30 in die Ablaufkammer 26; der Kühlmitteldurchfluß durch die erste Zulaufkammer 24 zu der Ablaufkammer 26 ist gesperrt.

Eine erste Feder 46 zwischen der Unterseite des ersten Ventiltellers 36 und einem Widerlager 47 bewirkt ein Zurückfahren des Außenteils des Dehnstoffelements 34 nach oben, wenn die Solltemperatur unterschritten wird. Eine zweite Feder 48 zwischen der Oberseite des zweiten Ventiltellers 40 und einem Absatz am Dehnstoffelement 34 ermöglicht ein Hindurchwandern des unteren Fortsatzes 50 des Dehnstoffelements 34 nach unten durch den zweiten Ventilteller 40, wenn dieser am Ventilsitz 38 zwischen der Ablaufkammer 26 und der zweiten Zulaufkammer 30 anliegt.

Bei dem erfindungsgemäßen Thermostatventil 12 sind, wie in Fig. 2 dargestellt, die Ventilsitze 32 und 38, die zur Abteilung der Zulaufkammer 24 von der Ablaufkammer 26 bzw. der Zulaufkammer 30 von der Ablaufkammer 26 dienen, mit einem Verstellrahmen 20 verbunden, der über einen mit diesem verbundenen Verstellkolben 52, der aus dem Ventilgehäuse 28 herausgeführt ist, innerhalb des Ventilgehäuses 28 verschiebbar ist. Durch eine Relativverschiebung der mit dem Verstellrahmen 20 verbundenen Ventilsitze 32 und 38 gegenüber den mit dem Dehnstoffelement 34 verbundenen Ventiltellern 36 und 40 läßt sich, wie im folgenden näher ausgeführt wird, eine Änderung der Öffnungstemperatur eines durch den Ventilsitz 32 und den Ventilteller 36 gebildeten ersten Ventils 53 und eine Änderung der Schließtemperatur eines durch den Ventilsitz 38 und den Ventilteller 40 gebildeten zweiten Ventils 54 erzielen. Zwischen dem Verstellrahmen 20 und dem Ventilgehäuse 28 ist eine Feder 56 angeordnet, die eine Rückstellbewegung des Verstellrahmens 20 nach erfolgter Verstellung ermöglicht bzw. unterstützt.

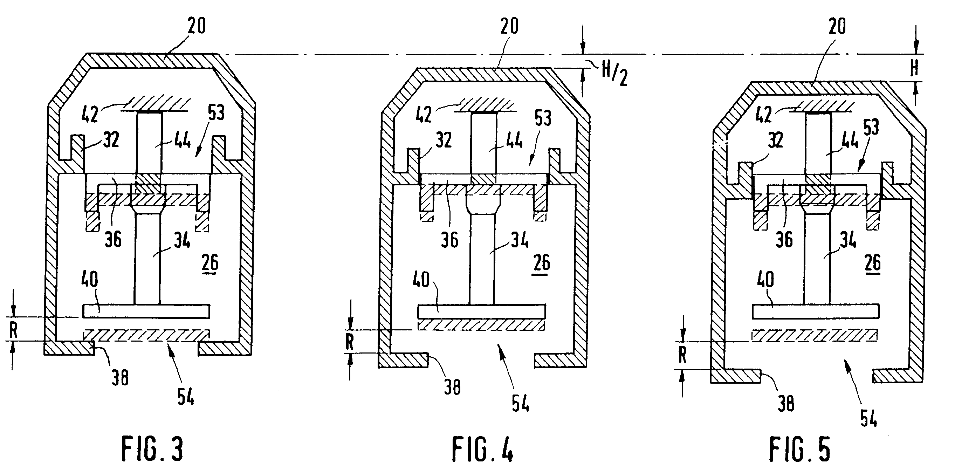

In den Fig. 3 bis 5 ist die Funktionsweise des erfindungsgemäßen Thermostatventils 12 infolge der möglichen Relativverstellung zwischen den mit dem Verstellrahmen 20 verbundenen Ventilsitzen 32 und 38 und den mit dem Dehnstoffelement 34 verbundenen Ventiltellern 36 und 40 dargestellt. Fig. 3 zeigt, in ununterbrochenen Linien dargestellt, die Relativposition des Verstellrahmens 20 zum Dehnstoffelement 34, wie sie der in einem herkömmlichen Thermostatventil entspricht. Bei der dargestellten Konfiguration möge das Dehnstoffelement 34 eine Ansprechtemperatur (Öffnungstemperatur des Ventils 53) von 60 °C haben und die Schließtemperatur des Ventils 54 70 °C betragen. Der Regelbereich eines derart konfigurierten Thermostatventils ist demnach durch eine Ansprechtemperatur von 60 °C und einen Temperaturbereich zwischen Öffnen und Schließen des Ventils 53 bzw. des Ventils 54 von 10 °C definiert.

Die folgenden Erläuterungen sind stets im Zusammenhang mit den bereits näher erläuterten Fig. 1 und 2 zu sehen. Steigt die Temperatur in der Ablaufkammer 26 des Thermostatventils, ergibt sich eine Ausdehnung des Kolbens 44 des Dehnstoffelementes 34. Der Kolben 44 stützt sich mit seinem oberen Ende am Steg 42 des hier nicht dargestellten Ventilgehäuses 28 ab, so daß sich eine Verschiebung des Dehnstoffelements 34 zusammen mit den Ventiltellern 36 und 40 gegenüber den Ventilsitzen 32 und 38 ergibt. Das Ventil 53, das den Durchgang von der mit dem Verbrennungsmotor 6 verbundenen Zulaufkammer 24 zur Ablaufkammer 26 bei Temperaturen unter 60 °C verschließt, wird geöffnet und der Zustrom von der Zulaufkammer 24 in die Ablaufkammer 26 ermöglicht. Mit steigender Temperatur in der Ablaufkammer 26 erfolgt eine stetig zunehmende Öffnung des Ventils 53 bis schließlich bei Erreichen der Schließtemperatur das Ventil 54 durch Anlage des Ventiltellers 40 am Ventilsitz 38 geschlossen ist. Die Ventilteller 36 und 40 sind in dieser Position schraffiert dargestellt. Der kreuzweise schraffierte Bereich des Kolbens 44 stellt schematisch den Betrag der Ausdehnung dar, um den sich der Kolben 44 bei einer Erhöhung der Temperatur von 60 °C auf 70 °C ausdehnt.

Die Fig. 4 und 5 zeigen nun, wie durch Relativverstellung des Verstellrahmens 22 gegenüber dem Dehnstoffelement 34 der Regelbereich des Thermostatventils auf einfache Art und Weise sogar während der Funktion des Thermostatventils verstellt werden kann. Die Verstellung erfolgt über den in den Fig. 4 und 5 nicht dargestellten, mit dem Verstellrahmen 20 verbundenen Verstellkolben 52 von außerhalb des Ventilgehäuses 28. Ausgehend von der in Fig. 3 dargestellten Ausgangskonfiguration ist der Verstellrahmen 20 gegenüber dem Dehnstoffelement 34 in Fig. 4 um den Betrag H/2 und in Fig. 5 um den Betrag H verstellt. Hierdurch ergibt sich eine Relativverschiebung zwischen den Ventilsitzen 32, 38 und den Ventiltellern 36, 40. Infolge dieser Relativverschiebung und der hülsenartigen Ausbildung des Ventilsitzes 32 erfolgt eine Öffnung des Ventils 53 in den Fig. 4 und 5 erst dann, wenn der Kolben 44 des Dehnstoffelementes 34 sich um den Betrag H/2 bzw. H ausgedehnt hat. Die Öffnung des Ventils 53 erfolgt demgemäß erst bei einer höheren Öffnungstemperatur. Bei den dargestellten Beispielen möge die Öffnungstemperatur bei Fig. 4 65 °C und die Öffnungstemperatur bei Fig. 5 70 °C betragen. Die in den Fig. 3 bis 5 dargestellten Konfigurationen weisen also unterschiedliche Öffnungstemperaturen auf, obwohl der Temperaturbereich, dargestellt durch die Strecke R, in denen das Thermostatventil jeweils arbeitet, in allen drei Beispielen gleich ist. Der konstante Temperaturbereich von 10 °C bei den vorliegenden Beispielen ergibt sich aus dem konstanten Abstand der Ventilsitze 32 und 38 in den dargestellten Verstellrahmen 20. Bei einer variablen Gestaltung des Abstandes zwischen den Ventilsitzen 32 und 38 läßt sich natürlich auch der Temperaturbereich des Thermostatventils verändern.

Die zusätzlichen Regelmöglichkeiten, die durch den erfindungsgemäßen Aufbau des Thermostatventils, dargestellt in den Fig. 3 bis 5, ermöglicht werden, sollen anhand des folgenden Beispieles näher dargestellt werden. Hierbei wird angenommen, daß sich das Thermostatventil 12 zunächst in einer Ausgangskonfiguration befindet, wie sie der in Fig. 4 dargestellten entspricht. Die Öffnungstemperatur des motorseitigen Ventils 53 beträgt demnach 65 °C und die Schließtemperatur des der Bypassleitung 8 zugewandten Ventils 54 75 °C. Das Heizgerät 2 bzw. der Kühlmittel/Luft-Wärmetauscher 4 des Kühlmittelkreislaufs werden so betrieben, daß sich am Ausgang des Kühlmittel/Luft-Wärmetauschers 4 eine Temperatur von T = 65 °C ergibt. Ausgehend von diesen Randbedingungen soll nun im ersten Fall die Motorvorwärmung unter Aufrechterhaltung der Regelfunktion des Thermostatventils erhöht werden. Dies läßt sich durch Einstellung einer Konfiguration des Thermostatventils 12 erreichen, wie sie der in Fig. 3 entspricht. Hier beträgt bei gleichem Dehnstoffelement 34 die Öffnungstemperatur des Ventils 53 60 °C und die Schließtemperatur des Ventils 54 70 °C. Die Folge hiervon ist, daß das Ventil 53 sich infolge der um 5 °C unterhalb der Kühlmitteltemperatur liegenden Öffnungstemperatur eher öffnet und so eine Durchströmung des Verbrennungsmotors 6 mit aufgeheiztem Kühlmittel früher möglich wird. Im zweiten Fall soll die Motorvorwärmung vermindert werden bzw. keine Motorvorwärmung erfolgen. Dies wird dadurch erreicht, daß das Thermostatventil 12 in eine Konfiguration überführt wird, wie sie der in Fig. 5 dargestellten entspricht. Hierdurch ist die Öffnungstemperatur des Ventils 53 auf 70 °C und die Schließtemperatur des Ventils 54 auf 80 °C erhöht. Gegentiber der Konfiguration in Fig. 3 wird also das Ventil 53 erst dann geöffnet, wenn der Kolben 44 des Dehnstoffelements 34 bereits eine Ausdehnung erreicht hat, die einer Temperaturerhöhung um 5 °C entspricht. Bei dieser Temperaturdifferenz ist das Ventil 54 des Thermostatventils gemäß der Konfiguration in Fig. 3 bereits geschlossen. Die erhöhte Öffnungstemperatur des Thermostatventils in der Konfiguration gemäß Fig. 5 hat zur Folge, daß das motorseitige Ventil 53 bei der vorgegebenen Temperatur des Kühlmittels von 65 °C nicht öffnet und somit keine Durchströmung des Verbrennungsmotors 6 erfolgt. Sollte sich dennoch kurzzeitig eine Temperaturerhöhung des zuströmenden Kühlmittels, etwa infolge einer verringerten Wärmeabnahme im Fahrgastinnenraum ergeben, so ist wegen der Aufrechterhaltung der Regelfunktion des Thermostats eine entsprechende Wärmeabgabe an den Verbrennungsmotor 6 ermöglicht.

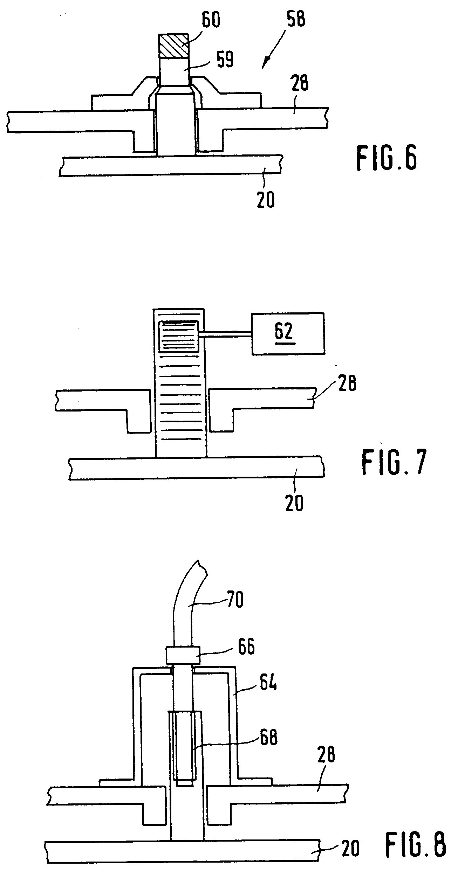

In den Fig. 6 bis 8 sind verschiedene Möglichkeiten dargestellt, den Verstellrahmen 20 über einen Verstellantrieb zu verstellen. Fig. 6 zeigt einen Verstellantrieb 58, der im wesentlichen dadurch gegeben ist, daß der auf den Verstellrahmen 20 wirkende Verstellkolben 52 als Dehnstoffelement 59 ausgeführt ist. Das Dehnstoffelement 59 ist mittels eines Kaltleiters 60 elektrisch beheizbar. Wenn das Dehnstoffelement 59 aktiviert wird, drückt der Kolben 52 den Verstellrahmen entgegen der in Fig. 2 dargestellten Feder 56 in eine veränderte Position. Die Aktivierung des Kaltleiters 60 kann etwa vom Armaturenbrett des Kraftfahrzeuges aus erfolgen, oder mit einem geeigneten Meßwertgeber, z.B. dem Öltemperaturgeber des Motors, gekoppelt sein. Im letzteren Fall wäre somit eine automatische Verstellung des Verstellrahmens 20 in Abhängigkeit von der Öltemperatur des Motors ermöglicht.

In Fig. 7 ist schematisch veranschaulicht, wie ein Elektromotor 62 als Verstellantrieb eingesetzt werden kann. Fig. 8 zeigt eine Möglichkeit der manuellen Verstellung des Verstellrahmens 20, wobei eine sich am Ventilgehäuse 28 über ein Widerlager 64 abstützende Stellschraube 66 verwendet wird. In diesem Fall ist der Verstellkolben 52 des Verstellrahmens 20 mit einer Gewindebohrung 68 versehen, so daß durch Ein- oder Ausdrehen der Stellschraube 66 in die Gewindebohrung 68 eine Änderung der Relativlage zwischen dem Verstellrahmen 20 und dem Ventilgehäuse 28 ermöglicht ist. Die Stellschraube 66 kann dabei mit einer biegsamen Welle 70 verbunden sein, so daß auch in diesem Fall eine einfache Verstellung vom Armaturenbrett des Fahrzeuges aus möglich ist.

Bei den in Fig. 1 gestrichelt eingezeichneten Komponenten handelt es sich um eine Bypassleitung 84 für den Wärmetauscher 4, ein dieser Bypassleitung 84 zugeordnetes Regelventil 86, und um eine Zusatzwasserpumpe 88 im Rücklauf von dem Motor 6 zu dem Heizgerät 2. Die Bypassleitung 84 und das Regelventil 86 an der Wiedereinmündung der Bypassleitung 84 ermöglicht eine besonders gute Regelung der Erwärmungstemperatur des Fahrzeuginnenraums. Wenn eine gewünschte Fahrzeuginnentemperatur erreicht ist, steuert das Regelventil 86 derart, daß das im Heizgerät 2 aufgeheizte Kühlmittel an dem Wärmetauscher 4 vorbeiströmt, und umgekehrt. Die Zusatzwasserpumpe 88 ist bei großer Länge des Kühlmittelkreislaufs günstig. Insbesondere ist sie entbehrlich, weil das Heizgerät 2 normalerweise eine integrierte Kühlmittelpumpe aufweist.

## Patentansprüche

1. Thermostatventil (12), insbesondere zur Steuerung von Kühlmittelflüssen in einem mit einem Heizgerät (2) versehenen Kühlmittelkreislauf eines Verbrennungsmotors (6) für ein Kraftfahrzeug, mit einem zwei Zulaufkammern (24, 30) und eine Ablaufkammer (26) aufweisenden Ventilgehäuse (28) und einem ein Dehnstoffelement (34) aufweisenden Ventilkolben (44) mit zwei Ventiltellern (36, 40), die im Zusammenwirken mit die Zulaufkammern (24, 30) von der Ablaufkammer (26) abteilenden Ventilsitzen (32, 38) Ventile bilden, wobei die Relativlage der Ventilsitze (32, 38) zu den Ventiltellern (36, 40) von außen veränderbar ist und durch die Gestaltung eines Ventilsitzes (32, 38) und/oder eines Ventiltellers (36, 40) eine zumindest teilweise von der Relativlagenänderung unabhängige Abdichtung zwischen einer Zulaufkammer (24, 30) und der Ablaufkammer (26) gegeben ist.

2. Thermostatventil nach Anspruch 1 zur Steuerung von Kühlmittelflüssen in einem mit einem Heizgerät (2) versehenen Kühlmittelkreislauf eines Verbrennungsmotors (6), dadurch gekennzeichnet, daß der der motorseitigen Zulaufkammer (24) zugeordnete Ventilsitz (32) parallel zur Ausdehnungsrichtung des Dehnstoffelements (34) hülsenartig ausgebildet ist.

3. Thermostatventil nach Anspruch 1 oder 2, dadurch gekennzeichnet, daß die Ventilsitze (32, 38) mit einer im Ventilgehäuse (28) geführten Verstelleinrichtung (20) verbunden sind und durch die Verstelleinrichtung (20) über einen aus dem Ventilgehäuse (28) herausgeführten Verstellkolben (52) von außen verstellbar sind.

4. Thermostatventil nach Anspruch 3, dadurch gekennzeichnet, daß die Verstelleinrichtung einen die Ventilsitze (32, 38) aufnehmenden oder bereichsweise ventilsitzartig ausgebildeten Verstellrahmen (20) aufweist.

5. Thermostatventil nach Anspruch 3 oder 4, dadurch gekennzeichnet, daß der aus dem Ventilgehäuse (28) herausgeführte Verstellkolben (52) in Wirkverbindung mit einem Verstellantrieb (58) steht.

6. Thermostatventil nach Anspruch 5, dadurch gekennzeichnet, daß der Verstellantrieb (58) einen Elektromotor (62) aufweist.

7. Thermostatventil nach Anspruch 5, dadurch gekennzeichnet, daß der Verstellantrieb eine Verstellschraube (66) aufweist.

8. Thermostatventil nach Anspruch 5, dadurch gekennzeichnet, daß der Verstellantrieb ein elektrisch beheizbares Dehnstoffelement (59) aufweist.

## Claims

1. Thermostatic valve (12), in particular for controlling coolant flows in a coolant circuit, which is provided with a heating device (2), of an internal combustion engine (6) for a motor vehicle, having a valve housing (28) which has two inlet chambers (24, 30) and an outlet chamber (26), and having a valve piston (44) having an expansion material element (34) and having two valve plates (36, 40) which form valves in collaboration with valve seatings (32, 38) dividing the inlet chambers (24, 30) off from the outlet chamber (26), the relative position of the valve seatings (32, 38) with respect to the valve plates (36, 40) being alterable from the outside and the shaping of a valve seating (32, 38) and/or of a valve plate (36, 40) producing a sealing between an inlet chamber (24, 30) and the outlet chamber (26) which is at least partially independent of the alteration in relative position.

2. Thermostatic valve according to Claim 1, for controlling coolant flows in a coolant circuit, which is provided with a heating device (2), of an internal combustion engine (6), characterized in that the valve seating (32) associated with the inlet chamber (24) on the engine side is constructed in the manner of a sleeve parallel to the direction of expansion of the expansion material element (34).

3. Thermostatic valve according to Claim 1 or 2, characterized in that the valve seatings (32, 38) are connected to an adjustment device (20) guided in the valve housing (28) and are adjustable from the outside by the adjustment device (20) by way of an adjustment piston (52) which is guided outside the valve housing (28).

4. Thermostatic valve according to Claim 3, characterized in that the adjustment device has an adjustment frame (20) which receives the valve seatings (32, 38) or is constructed in some regions in the manner of a valve seating.

5. Thermostatic valve according to Claim 3 or 4, characterized in that the adjustment piston (52) which is guided outside the valve housing (28) is in operative connection with an adjustment drive (58).

6. Thermostatic valve according to Claim 5, characterized in that the adjustment drive (58) has an electric motor (62).

7. Thermostatic valve according to Claim 5, characterized in that the adjustment drive has an adjustment screw (66).

8. Thermostatic valve according to Claim 5, characterized in that the adjustment drive has an electrically heatable expansion material element (59).

## Revendications

1. Soupape thermostatique (12), notamment pour commander des flux d'agent refroidisseur dans le circuit d'agent refroidisseur muni d'un appareil de chauffage (2) d'un moteur à combustion interne (6) pour un véhicule à moteur, comprenant une boîte à soupape (28) présentant deux chambres d'arrivée (24, 30) et une chambre d'évacuation (26), et un piston de soupape (44) présentant un élément en une matière extensible (34) et muni de deux têtes de soupape (36, 40) qui, en coopérant avec les sièges de soupape (32, 38) séparant les chambres d'arrivée (24, 30) de la chambre d'évacuation (26), forment des clapets, sachant que la position relative des sièges de soupape (32, 38) par rapport aux têtes de soupape (36, 40) peut être modifiée de l'extérieur et que du fait de la présence d'un siège de soupape (32, 38) et/ou d'une tête de soupape (36, 40), on obtient entre l'une des chambres d'arrivée (24, 30) et la chambre d'évacuation (26) une étanchéité qui est au moins partiellement indépendante de la modification de la position relative.

2. Soupape thermostatique selon la revendication 1 destinée à commander des flux d'agent refroidisseur dans le circuit d'agent refroidisseur muni d'un appareil de chauffage (2) d'un moteur à combustion interne (6) pour un véhicule à moteur, caractérisée en ce que le siège de soupape (32) associé à la chambre d'arrivée (24) située du côté du moteur est réalisé en forme de douille parallèlement à la direction d'extension de l'élément en matière extensible (34).

3. Soupape thermostatique selon la revendication 1 ou 2, caractérisée en ce que les sièges de soupape (32, 38) sont reliés à un dispositif de réglage (20) guidé dans la boîte à soupape (28) et sont réglables de l'extérieur à l'aide du dispositif de réglage (20) par le biais d'un piston de réglage (52) sortant ce la boîte à soupape (28).

4. Soupape thermostatique selon la revendication 3, caractérisée en ce que le dispositif de réglage présente un cadre de réglage (20) renfermant les sièges de soupape (32, 38) ou réalisé dans certaines zones à la manière d'un siège de soupape.

5. Soupape thermostatique selon la revendication 3 ou 4, caractérisée en ce que le piston de réglage (52) sortant de la boîte à soupape (28) est en liaison active avec un servomoteur (58).

6. Soupape thermostatique selon la revendication 5, caractérisée en ce que le servomoteur (58) présente un moteur électrique (62).

7. Soupape thermostatique selon la revendication 5, caractérisée en ce que le servomoteur présente une vis de réglage (66).

8. Soupape thermostatique selon la revendication 5, caractérisée en ce que le servomoteur présente un élément en une matière extensible (59) pouvant être chauffé électriquement.
